# EUROPEAN PATENT SPECIFICATION

(11) **EP 1 612 718 B1**
(45) Date of publication and mention of the grant of the patent: **10.11.2010**
(21) Application number: 05252051.7
(22) Date of filing: 31.03.2005
(51) Int. Cl.: G06K 9/00, G06K 9/62

(54) **Registration method for biometric authentication system, corresponding biometric authentication system, and program for same**
Registrierverfahren für ein biometrisches Authentiziersystem, entsprechendes biometrisches Authentiziersystem und Programm
Système, procédé et logiciel d'enregistration pour l'authentification biométrique

(30) Priority: 28.06.2004 JP 2004190437
(43) Date of publication of application: 04.01.2006
(73) Proprietor: FUJITSU LIMITED, Kawasaki-shi, Kanagawa 211-8588 (JP); Fujitsu Frontech Limited, Inagi-shi, Tokyo 206-8555 (JP)
(72) Inventor: Kamata, Hideo, Inagi-shi, Tokyo 206-8555 (JP); Kishino, Takumi, Inagi-shi, Tokyo 206-8555 (JP); Eguchi, Shinichi, Inagi-shi, Tokyo 206-8555 (JP); Watanabe, Masaki, Kawasaki-shi, Kanagawa 211-8588 (JP); Endoh, Toshio, Kawasaki-shi, Kanagawa 211-8588 (JP); Fukuda, Mitsuaki, Kawasaki-shi, Kanagawa 211-8588 (JP)
(74) Representative: Stebbing, Timothy Charles

(56) References cited:
- WO-A-2004/021884
- JAIN A ET AL.: "Biometric Template Selection: A Case Study in Fingerprints" PROC. 4TH INT. CONF. AUDIO AND VIDEO-BASED PERSON AUTHENTICATION, 9 June 2003 (2003-06-09), - 11 June 2003 (2003-06-11) pages 335-342, XP007902580 Guildford, UK

## Description

This invention relates to a registration method for a biometric authentication system, a biometric authentication system, and a program for same, which uses biometric features of the human body to authenticate individuals, and in particular relates to a registration method for a biometric authentication system, a biometric authentication system, and a program for same to authenticate individuals by verifying detected biometric information against registered biometric information.

There exist numerous features of the human body enabling identification of individuals, among them fingerprints, palm prints, palm types, iris patterns, retina features, blood vessel patterns, facial features, voiceprints, manners (gait) of walking, the concha of the ear, DNA, and similar. Advances in biometric technology in recent years have been accompanied by various proposals of devices for identification of such biometric features which are a portion of the human body, to authenticate individuals.

Since the simultaneous terrorist attacks of September 2001, biometric authentication (fingerprint and facial authentication) has been adopted in ports and other immigration points in the U.S., and there has been worldwide interest in biometric authentication methods as a means of confirming the identity of individuals with high reliability. In financial institutions also, biometric authentication is being studied as a means for authenticating individuals, as countermeasures to illicit withdrawal of funds made possible by theft of bankbooks and cash cards and by forgery of seals and cards, and to preclude civil suits brought against financial institutions by the victims of such crimes.

In registration of such biometric information, methods of registration of fingerprint data have been proposed which entail detection of fingerprint data a plurality of times, extraction of common characteristic data from the plurality of sets of fingerprint data, and registration of the common characteristic data (see for example Japanese Patent Laid-open No. 01-263775 and Japanese Patent Laid-open No. 11232459). By means of these methods, effects on registered data of changes in fingerprint shapes due to detection noise and differences in finger pressure can be prevented.

In conventional methods for registration of biometric information, in light of the fact that exactly the same biometric characteristic data may not be obtained each time biometric information is detected and registered, the biometric characteristic data is detected a plurality of times, only the common data is extracted from the plurality of sets of characteristic data, and a single biometric characteristic data set is registered, so as to exclude noise due to the detection device and the effect of the particular state at the time of detection.

However, in conventional methods in which common data is extracted and registered, differences in the noise of the biometric detection device and in the detection state at the time of biometrics detection can be excluded; but registration of common data means that there is not complete coincidence with the individual biometric characteristic data sets actually obtained, and there is the possibility that the amount of characteristic data is different from (less than) the amount of characteristic data detected. Hence, when verifying registered data against verification data at the time of authentication, accurate verification may not be possible.

Further, because measurements are made of a living entity, changes due to physical condition must be taken into account, and when common data is registered, if there is a change in physical condition compared with that at the time of registration, during authentication it may be difficult to authenticate the individual even though the individual is in fact the same (registered) person, so that various problems may arise. For example, in fingerprint authentication, verification rates will differ when the fingers are damp and when the fingers are dry.

"Biometric template selection: a case study in fingerprints" by Jain et al. (Proc. of 4th Int'l Conference on AVBPA, P.335-342, 2003, XP007902580) discloses two techniques to automatically select prototype fingerprint templates for a finger from a given set of fingerprint impressions. The first method performs clustering in order to choose a template set that best represents the intra-class variations, while the second method selects templates that have maximum similarity with the rest of the impressions and, therefore, represent typical measurements of biometric data.

It is therefore desirable to provide a registration method for a biometric authentication system, a biometric authentication system, and a program for the same, which can effectively utilize biometric characteristic data detected a plurality of times to perform verification, even when there are differences in detection devices, changes in physical condition of the subject, and differences in detection states.

It is further desirable to provide a registration method for a biometric authentication system, a biometric authentication system, and a program for the same, to perform verification corresponding to changes in the state of the living body using biometric characteristic data detected a plurality of times, without lowering verification accuracy.

It is still further desirable to provide a registration method for a biometric authentication system, a biometric authentication system, and a program for the same, to perform smooth verification with minimal problems even when there are changes in the physical condition of the living body, without lowering verification accuracy.

According to a first aspect of the invention, there is provided a biometric authentication system, which detects and registers biometric characteristic data from a living body, and detects further biometric characteristic data from the living body and verifies this with the said registered characteristic data to authenticate an individual. The system has a detection unit, for detecting biometric information from the living body; a storage unit, for storing the registered biometric characteristic data; and a processing unit for extracting characteristic data from biometric information detected by the detection unit and registering the characteristic data, in the storage unit, and also extracting characteristic data from biometric information detected by the detection unit, and verifying the extracted characteristic data against the characteristic data registered in the storage unit, to authenticate the individual. In registering data, the processing unit obtains a plurality of sets of biometric information for the same living body from the detection unit, judges the degree of mutual similarity between characteristic data sets extracted from the plurality of sets of biometric information, and registers a plurality of characteristic data sets with a high degree of similarity in the above storage unit. The biometric authentication system is **characterised in that** said processing unit is arranged to register biometric characteristic data acquired in a first time, calculate the degree of similarity with biometric characteristic data set acquired in a second time, and compare the said degree of similarity to a prescribed threshold value, when the degree of similarity of the biometric characteristic data for registration is equal to or greater than the threshold value, said processing unit is arranged to judge the degree of similarity to be high and register said biometric characteristic data in said storage unit, and when the degree of similarity of the biometric characteristic data for registration is less than the threshold value, said processing unit is arranged to acquire the biometric information from said detection unit again, calculate the degrees of similarity between biometric characteristic data set from an nth time with every biometric characteristic data sets from the first time to the (n-1)th time, and compare each degree of similarity to the threshold value, until a prescribed number of characteristic data sets is registered in said storage unit.

A second aspect of the invention provides a registration method for acquiring and registering biometric characteristic data of an individual for use in authenticating the individual. The method has a step of obtaining a plurality of sets of biometric information for a same living body from a biometric detection unit; a step of judging the degree of mutual similarity among sets of biometric data extracted from the above plurality of sets of biometric information; and a step of registering, in a storage unit, a plurality of characteristic data sets with a high degree of similarity. The registration method is **characterised in that** said step of acquiring biometric information a plurality of times comprises acquiring essentially the same said biometric information of the body part from said detection unit until a prescribed number of characteristic data sets with a high degree of similarity are obtained, and said step of judging the degree of similarity comprises: a step of calculating the degrees of similarity between biometric characteristic data set acquired in an nth time with every biometric characteristic data sets acquired in the first time to the (n-1)th time; a step of comparing a measured value of said degree of similarity to a prescribed threshold value; and a step of judging whether the biometric characteristic data is appropriate for registration, wherein when a measured value of the degree of similarity of biometric characteristic data for registration is equal to or greater than the threshold value, the biometric characteristic data is judged to be appropriate, and when the degree of similarity of the biometric characteristic data for registration is less than the threshold value, the biometric characteristic data is judged to be not appropriate, continue acquiring another biometric information.

A third aspect of the invention provides a program for causing a computer to execute a step of obtaining biometric information for a same living body from a biometric detection unit a plurality of times; a step of judging the degree of mutual similarity among sets of characteristic data extracted from the biometric information obtained a plurality of times; and a step of registering, in a storage unit, a plurality of characteristic data sets having a high degree of similarity. The program is **characterised in that** said step of acquiring biometric information a plurality of times comprises acquiring essentially the same said biometric information of the body part from said detection unit until a prescribed number of characteristic data sets with a high degree of similarity are obtained, and said step of judging the degree of similarity comprises: a step of calculating the degrees of similarity between biometric characteristic data set acquired in an nth time with every biometric characteristic data sets acquired in the first time to the (n-1)th time; a step of comparing a measured value of said degree of similarity to a prescribed threshold value; and a step of judging whether the biometric characteristic data is appropriate for registration, wherein when a measured value of the degree of similarity of biometric characteristic data for registration is equal to or greater than the threshold value, the biometric characteristic data is judged to be appropriate, and when the degree of similarity of the biometric characteristic data for registration is less than the threshold value, the biometric characteristic data is judged to be not appropriate, continue acquiring another biometric information.

It is preferable that the processing unit use the biometric characteristic data obtained first as a reference, to judge the degree of similarity of biometric characteristic data obtained subsequently (i.e. second to nth times).

It is preferable that the processing unit, after registering the plurality of characteristic data sets with a high degree of similarity in the above storage unit, acquires new biometric information from the above detection unit, extracts characteristic data from the new biometric information, verifies this with the plurality of characteristic data sets registered in the above storage unit, and thus performs trial authentication of the individual.

It is preferable that the detection unit comprises an image capture unit for capturing images of biometric information of a user as the biometric information, and that biometric characteristic data registered in the above storage unit be characteristic data obtained from the above biometric information.

It is preferable that at the time of individual authentication the above processing unit read the plurality of sets of biometric characteristic data from the storage unit according to identification information for the individual, acquires biometric information of the individual from the detection unit, extracts characteristic data therefrom, and performs verification with the plurality of characteristic data sets registered in the above storage unit.

It is preferable that the processing unit detects the fact that the extracted characteristic data is similar to one of the plurality of registered characteristic data sets, to authenticate (verify the identity of) the individual.

Thus, biometric information is obtained a plurality of times from the same living body by the detection unit, the degree of mutual similarity among characteristic data sets from plurality of biometric information sets is judged, and a plurality of characteristic data sets with a high degree of similarity are registered in a storage unit, so that even if biometric characteristic data detected a plurality of times is used, stable verification corresponding to changes in the state of the living body can be performed without lowering the accuracy of verification, and moreover problems with users can be prevented.

### In the drawings:

Fig. 1 shows the configuration of a biometric authentication system in one embodiment of the invention;
Fig. 2 is a functional block diagram of biometric authentication processing in Fig. 1;
Fig. 3 is a functional block diagram of biometric information registration processing in Fig. 2;
Fig. 4 is a first diagram of the flow of biometric information registration processing in Fig. 3;
Fig. 5 is a second diagram of the flow of biometric information registration processing in Fig. 3;
Fig. 6 is an explanatory drawing of fingerprint biometric information;
Fig. 7 is an explanatory diagram of the biometric characteristic data of Fig. 6;
Fig. 8 is an explanatory diagram of registration data in the storage portion of Fig. 3;
Fig. 9 is an explanatory diagram of mutual comparison of three biometric characteristic data sets in Fig. 4;
Fig. 10 is an explanatory diagram of mutual comparison of four biometric characteristic data sets in Fig. 5;
Fig. 11 is a functional block diagram of trial authentication processing in another embodiment of the invention;
Fig. 12 is a diagram of the flow of trial authentication processing in Fig. 11; and,
Fig. 13 is an explanatory diagram of verification processing in Fig. 11.

Below, embodiments of the invention are explained, in the order of a biometric authentication system, biometric information registration method, biometric information registration method to perform trial authentication, and other embodiments.

### Biometric Authentication System

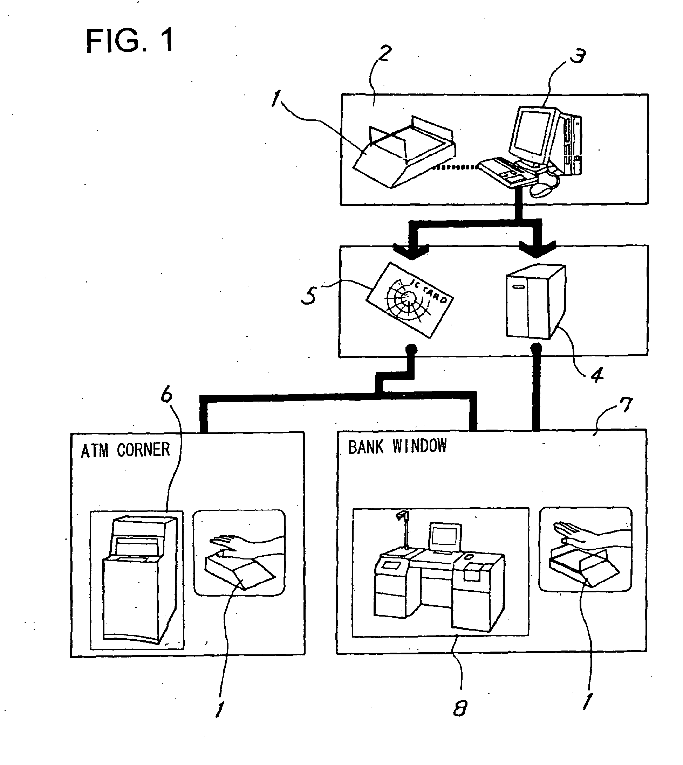

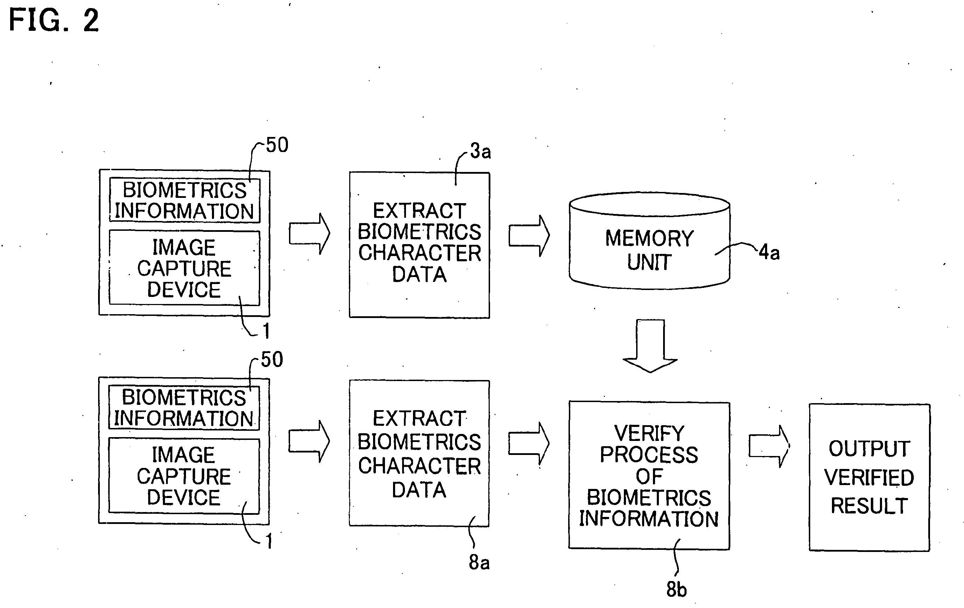

Fig. 1 shows the configuration of a biometric authentication system in one embodiment of the invention, and Fig. 2 is a drawing explaining the biometric authentication processing of Fig. 1. As shown in Fig. 1, an image capture device 1 and a terminal (for example, a personal computer) 3 connected thereto are provided. As shown in Fig. 2, the image capture device 1 reads biometric information of a user, and a biometric characteristic extraction processing function 3a of the terminal 3 extracts and registers its characteristics in the terminal 3 as biometric characteristic information.

This biometric characteristic data is stored in a storage portion 9a of a database server 9 connected to the terminal 3 or in an individual card 5 held by the user. The server 9 is connected to a gateway 7 of a gateway terminal 8, and the gateway terminal 8 is connected to an image capture device 1.

When the user presents him/herself at the gateway 7, the image capture device 1 at the gateway 7 reads biometric information of the user and biometric characteristic extraction processing 8a by the gateway terminal 8 extracts the biometric characteristics thereof. The gateway terminal 8 verifies this against the biometric characteristic data registered on the database server 4 as biometric characteristic data for the user, and authenticates (verifies the identity of) the individual.

Also, the server 4 may be connected to an automated gateway device 6. In order to use the automated gateway device 6 and receive service, the user causes biometric information to be read by an image capture device 1 provided in the automated gateway device 6. Similarly to Fig. 2, the automated gateway device 6 extracts biometric information (example 1: fingerprint patterns) therefrom, and verifies this against biometric characteristic data registered either on an IC card 5 held by the user or in a database server 4 as biometric characteristic data, to authenticate the individual.

### Method of Registration of Biometric Information

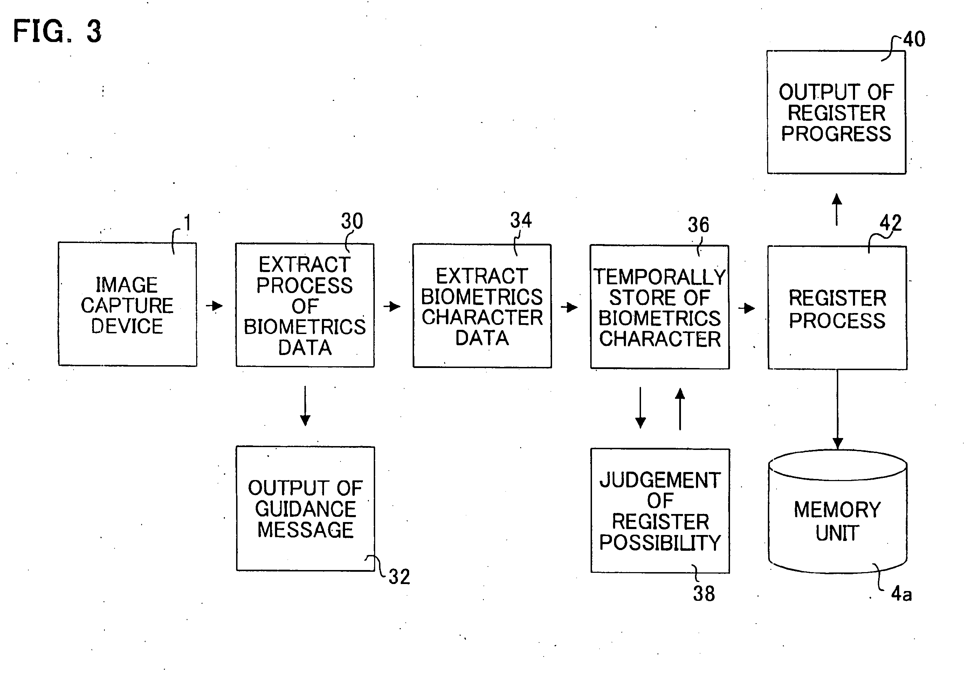

Next, the method of registration of biometric information explained in Fig. 2 is explained using Fig. 3 to Fig. 10.

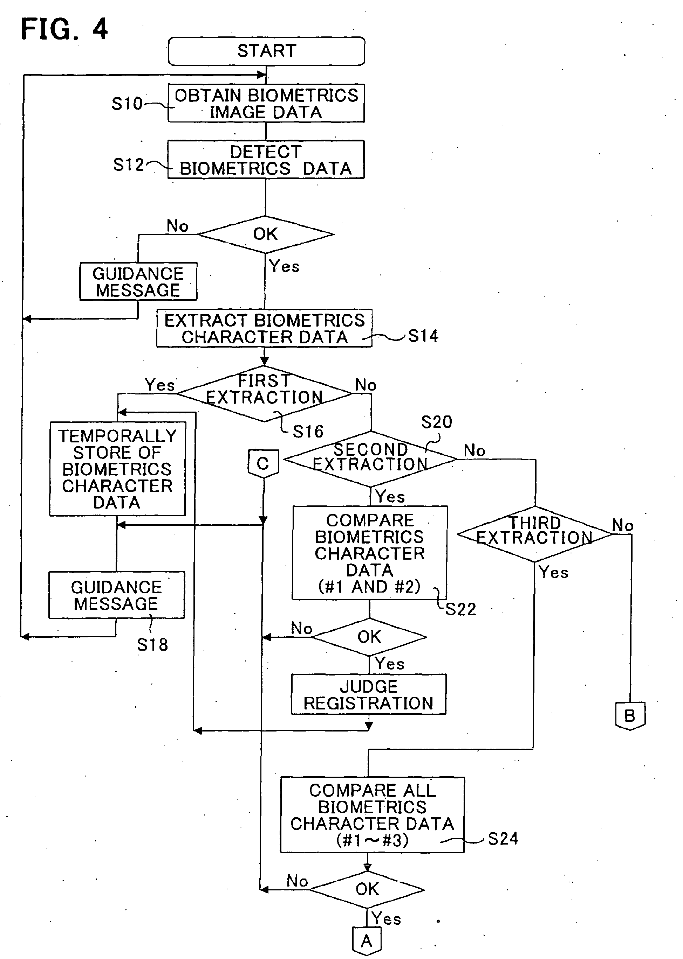

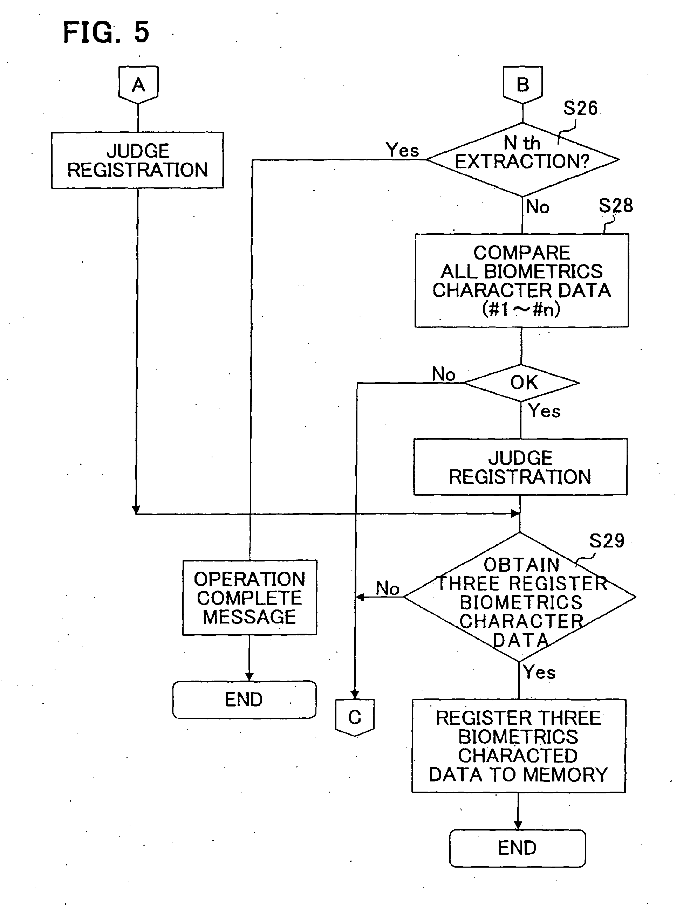

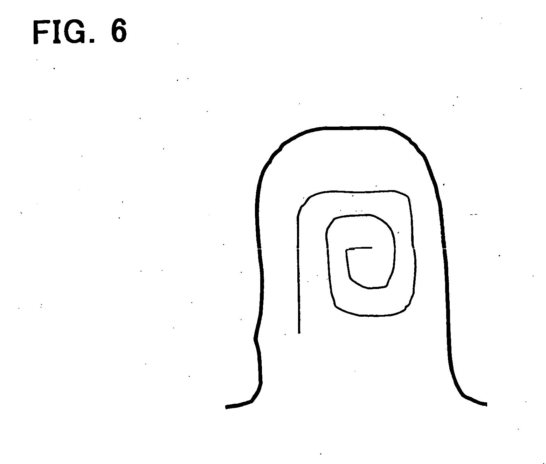

Fig. 3 is a functional block diagram of processing to register biometric information in a first embodiment of the invention; Fig. 4 and Fig. 5 are flow diagrams for the registration processing of Fig. 3; Fig. 6 explains the biometric characteristics detected in the processing of Fig. 4 and Fig. 5; Fig. 7 explains judgment of the degree of similarity of biometric characteristic data in Fig. 4 and Fig. 5; Fig. 8 explains an example of storage of biometric characteristic data registered in the processing of Fig. 3; and Fig. 9 and Fig. 10 explain the registration processing of Fig. 3, Fig. 4, and Fig. 5.

As shown in Fig. 3, the terminal device 3 connected to the image capture device 1 executes a series of registration processing functions (processes) 30 to 42. The terminal device 3 comprises, for example, a personal computer, and has a display unit, keyboard unit and data processing unit, as shown in the external view of Fig. 1. The data processing unit has a CPU, various types of memory, interface circuitry, and other circuitry necessary for data processing. The CPU executes the series of registration processing 30 through 42.

Biometric information detection processing 30 detects biometric information in images captured by the image capture device 1, and judges whether the images can be used in registration and verification processing. For example, there may be insufficient biometric information in an image if the body part is placed incorrectly. Guidance message output processing 32 outputs to the display of the terminal device 3 a message providing guidance for placement of a part of the body (for example, a finger), to the left, right, higher or lower when an image cannot be used in registration and verification processing. By this means, the operator of the terminal device 3 guides a user of the image capture device 1 to correct placement of the body part in question.

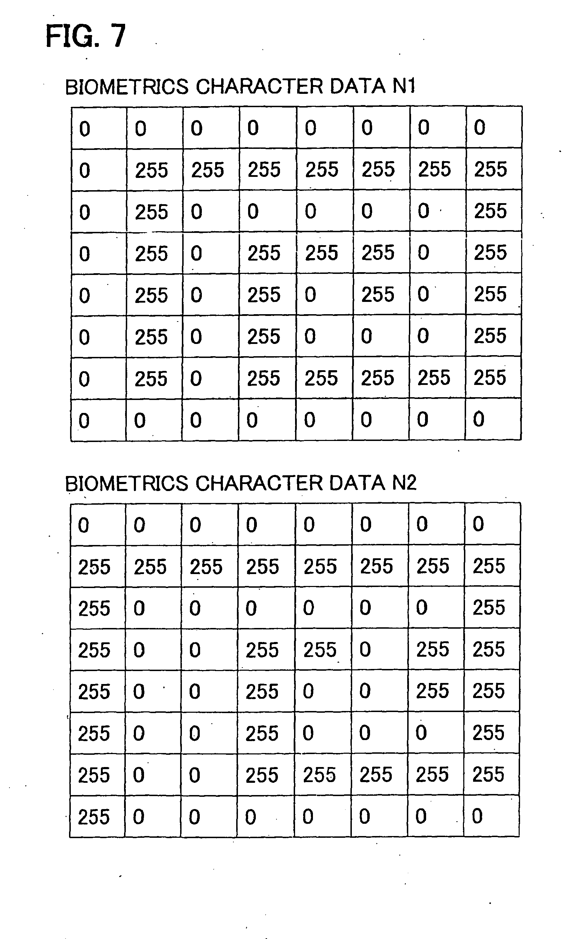

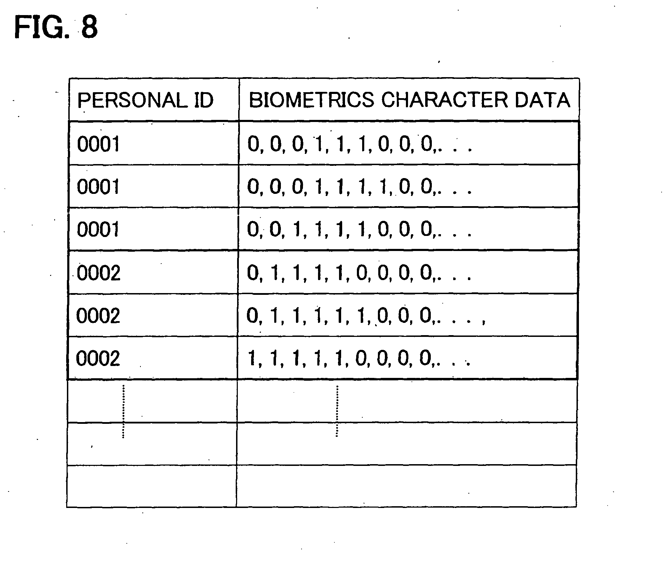

Biometric characteristic extraction processing 34 extracts biometric characteristic data from the biometric information when, in biometric information detection processing 30, it is judged that an image has been captured with the body part in the correct position. That is, due to differences in reflectivity, grayscale data of a body image is obtained as in Fig. 7. This biometric information is an image such as shown in Fig. 8, and the data is grayscale data as shown in Fig. 7.

Temporary biometric characteristic storage processing 36 temporarily stores the extracted biometric (biometrics) characteristic data. Registration possibility judgment processing 36 judges the degree of similarity of a plurality of biometric characteristic data sets and judges whether registration is desirable, in order to register a plurality of optimal (similar) biometric characteristic data sets from among the plurality of biometric characteristic data sets stored temporarily by temporary biometric characteristic storage processing 36. Registration processing 42 registers, in the storage portion 4a, biometric characteristic data for which registration has been judged desirable. Registration progress output processing 40 outputs, to the display of the terminal device 3, the state of progress of registration processing 42.

Thus exactly the same biometric characteristic data is not necessarily obtained in each image capture, and differences occur due to the image capture device, to changes in physical conditions, and to the state of image capture, including the angle and position at which images are captured. Consequently in this embodiment, image capture is performed a plurality of times, and only optimal information of sufficient value to be registered is registered. However, if the person performing registration (the user) is required to perform dozens of registration operations, the burden on the user is considerable. Hence the number of operations is limited to a number to which users are agreeable, and the optimum registration information is retrieved from this and registered in the storage portion.

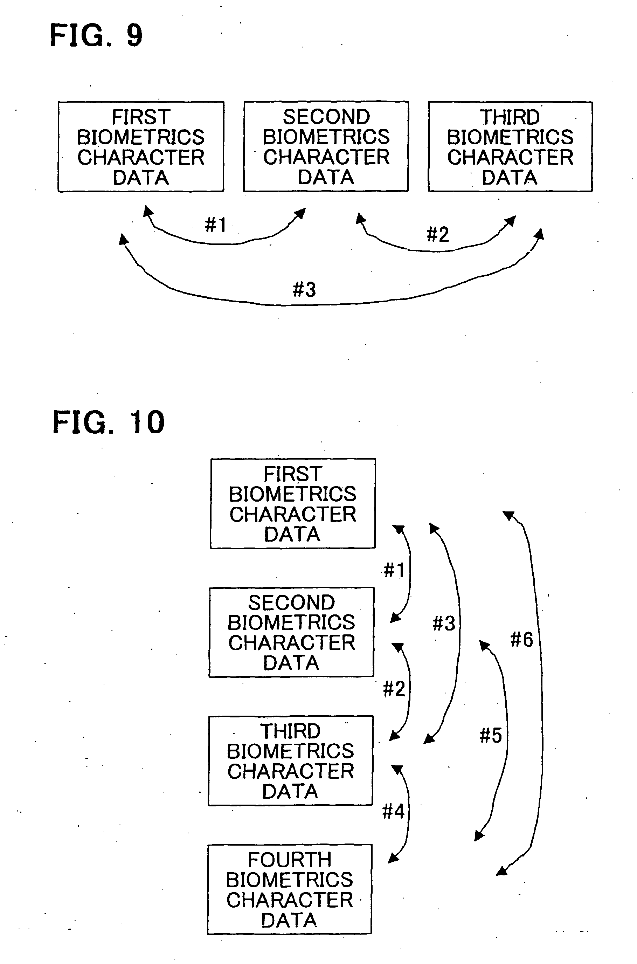

Fig. 4 and Fig. 5 explain in detail the flow of processing.
(S10) Near-infrared light is emitted by the image capture device 1 to obtain a biometric information image.
(S12) As stated above, the biometric information detection processing 30 detects the biometric information from images captured by the image capture device 1. When sufficient biometric information does not appear in the image, the processing 30 judges the image to be NG (failure). Then the guidance message output processing 32 outputs to the display of the terminal device 3 a message guiding the user to position the body part higher, lower, to the left or right. And processing returns to step S10.
(S14) When in the biometric information detection processing 30 it is judged that an image was captured in the correct position, the biometric characteristic extraction processing 34 extracts biometric characteristic data from the biometric information.
(S16) A judgment is made as to whether this is the first extraction. If the first extraction, the biometric characteristic data for the first extraction is stored temporarily.
(S18) Next, a guidance message prompting repeated operation is output to the display of the terminal device 3, and processing returns to step S10.
(S20) On the other hand, if in step S16 the extraction is not the first, but is judged to be the second or later, then a judgment is made as to whether the extraction is the second extraction.
(S22) When the extraction is the second extraction, the biometric characteristic data of the first extraction and the biometric characteristic data of the second extraction are compared, and the degree of similarity is calculated. The degree of similarity is a quantity indicating the extent to which the two biometric characteristic patterns coincide, and various pattern matching techniques can be applied. For example, as in the case of fingerprints, in the grayscale representation pixel matrix of the two biometric characteristic patterns in Fig. 7, two pattern pixel values (grayscale values) are acquired in pixels of interest and are compared. If the two coincide, a degree-of-similarity counter is incremented by 1. The pixel of interest is then changed, and in a similar manner, pixel values are compared to judge whether there is coincidence. If the two coincide, the degree-of-similarity counter is incremented by 1. This is performed for all the pixels in the pixel matrix, and the degree-of-similarity counter value is taken to be the degree of similarity. If the degree of similarity is equal to or greater than a predetermined value, a judgment of similarity (OK) is made, and it is judged that the biometric characteristic data of the second extraction can be registered. And processing returns to step S10. If on the other hand the degree of similarity is less than the predetermined (threshold) value, the data is judged to be not similar (NG). Processing then proceeds to the repeated operation guidance message output of step S18.
(S24) On the other hand, if in step S20 the extraction is judged to be the third rather than the second extraction, the degree of similarity of the biometric characteristic data of the third extraction with the biometric characteristic data extracted thus far (here, in the first and second extractions) is similarly calculated. That is, as shown in Fig. 9, in step S22 the degree of similarity #1 of the biometric characteristic data of the second extraction and the biometric characteristic data of the first extraction is calculated and judged. In step S29, the degree of similarity #3 of the biometric characteristic data of the third extraction and that of the first extraction, and the degree of similarity #2 of the biometric characteristic data of the third extraction and that of the second extraction, are calculated and judged. Through mutual comparison, if all the degrees of similarity #1, #2, #3 are equal to or exceed a threshold value, then all three are judged to be similar biometric characteristics. Processing then proceeds to step S30. On the other hand, if in the mutual comparison of Fig. 9 one among the degrees of similarity #1, #2, #3 is less than the threshold value, processing returns to step S18. That is, in step S24 three sets of biometric characteristic data are not obtained even after capturing images and extracting biometric characteristics three times, image capture is performed again, that is, for a fourth time, and biometric characteristic extraction is performed.
(S26) A judgment is made as to whether extraction is the Nth extraction exceeding the third (the fourth or later). N is set as a limiting number, since if some phenomenon incompatible with registration continues to occur, the burden on the operator is considerable. If the number of the extraction is equal to N, a message is output instructing the user to repeat from the beginning or to consult with onsite personnel.
(S28) On the other hand, if the extraction number is within the limiting number N, e.g. 4 as shown in Fig. 10, the degree of similarity #6 between the biometric characteristic data of the fourth extraction and that of the first extraction, the degree of similarity #5 between the biometric characteristic data of the fourth extraction and that of the second extraction, and the degree of similarity #4 between the biometric characteristic data of the fourth extraction and that of the third extraction, are calculated and judged. If all the degrees of similarity #4, #5, #6 are equal to or above the threshold value, the three biometric characteristics with the highest degree of similarity among the first, fourth, second, and third extractions are judged to be similar. But if in the mutual comparisons of Fig. 10 even one among the degrees of similarity #4, #5, #6 is judged not to exceed the threshold value, processing returns to step S18, a fifth image capture and biometric characteristic extraction are performed, and the degrees of similarity are similarly calculated and judged.
(S29) When three similar biometric characteristic data sets have been obtained, these are registered in the storage portion 4a together with the user ID. Fig. 8 shows the biometric characteristic data registered in the storage portion 4a; the user ID and three biometric characteristic data sets (here, black/white two-value data series) are registered in the storage portion 4a. If three sets are not obtained, image capture and biometric characteristic data extraction are performed up to the number of times set in the system (N times).

In this way, biometric characteristic data is extracted a plurality of times, and a plurality (here, 3) of biometric characteristic data sets with high degrees of similarity are registered as optimal biometric characteristic data. Hence even when there are differences in biometric information due to the image capture device, changes in physical condition, or the state of image capture of biometric information, because a plurality of images are captured and only optimum biometric information with a high degree of similarity, of sufficient value for registration, is registered, a plurality of biometric information sets can be registered reflecting differences, without lowering the accuracy of verification. Because obligating the person performing registration (the user) to perform dozens of registration operations would constitute a considerable burden on the user, only a number of operations to which users are normally agreeable are required, and the optimum registration information among this is retrieved and registered in the storage portion.

### Biometric Information Registration Processing to Perform Trial Authentication

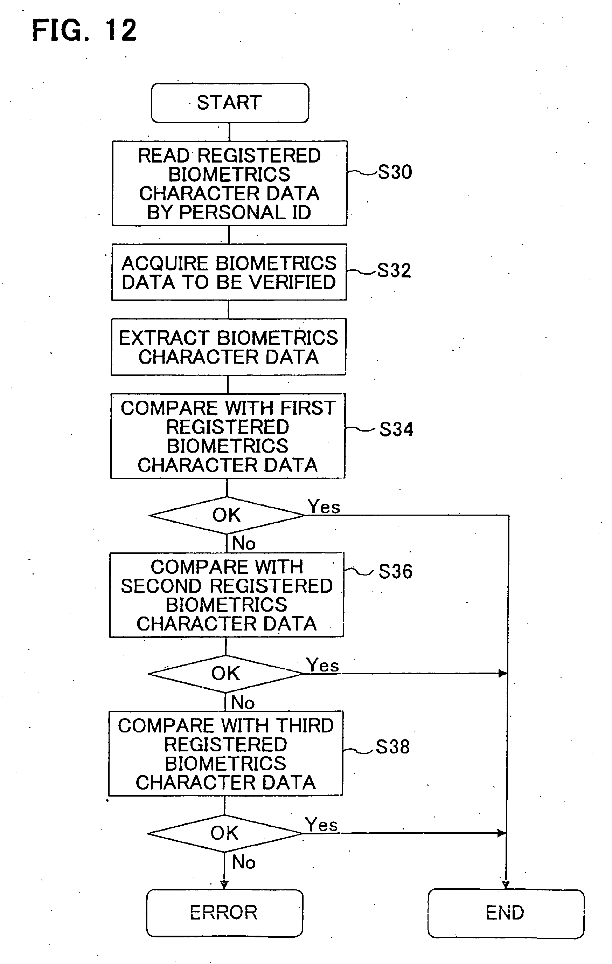

Next, trial authentication is explained. As stated above, when n (in the above, 3) registrations have been completed, verification and authentication are performed there and then. This provides practice for the user at performing authentication to verify his identify as matching an ID of his and also enables the user to confirm that his own biometric information can be reliably used for authentication. As a result, reassurance and trust in the system are increased. This trial authentication is performed by the same procedure as for actual authentication, and is explained below using Fig. 12 to Fig. 19.

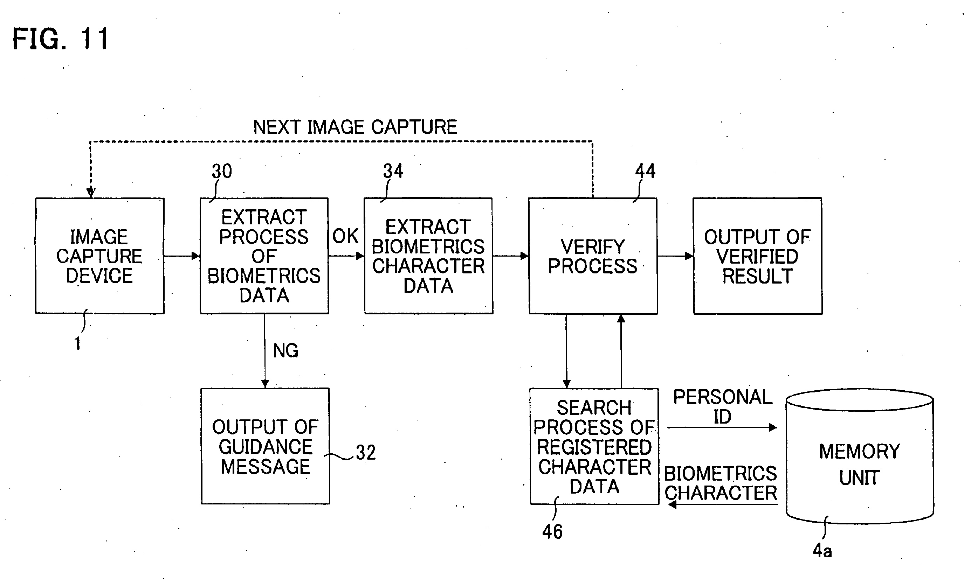

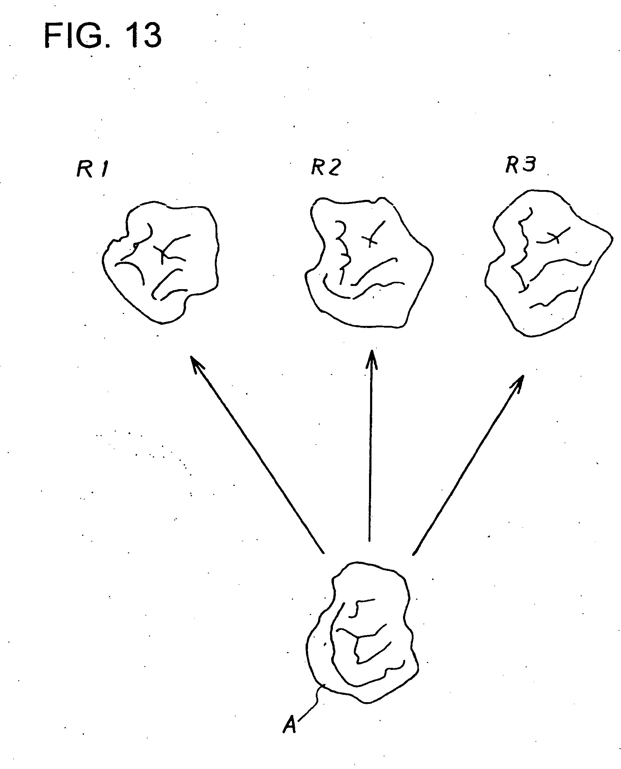

Fig. 11 is a functional block diagram of authentication processing in an embodiment of the invention; Fig. 12 is a diagram of the flow of authentication processing in Fig. 11; and Fig. 13 explains the operation in Fig. 11.

In Fig. 11, portions which are the same as in Fig. 2 and Fig. 3 are shown with the same symbols. That is, the terminal device 3 connected to the image capture device 1 executes a series of authentication processing functions 30 to 46. The CPU of the terminal device 3 executes the series of authentication processes 30 to 46.

The biometric information detection processing 30 detects biometric information from images captured by the image capture device 1, and judges from the biometric information images whether the images can be used in registration and verification processing. For example, the body part may not cover sufficient area in the image (i.e. not enough information). The guidance message output processing 32 displays, on the display of the terminal device 3, a message to provide guidance to move the body part upward, downward, left, right, forward etc when the captured image cannot be used in authentication and verification processing. By this means, the terminal device 3 guides the user of the image capture device 1 to obtain biometric information.

The biometric characteristic extraction processing 34 extracts biometric characteristic data from the biometric information when the biometric information detection processing 30 judges that an image has been captured at the correct body part position. That is, as shown in Fig. 7, grayscale data of an image of biometric information is obtained as biometric characteristic data A.

Registered biometric characteristic search processing 96 searches the storage portion 4a for the three sets of registered biometric characteristic data R1, R2 and R3 corresponding to the individual ID, as shown in Fig. 8. Verification processing 44 compares the biometric characteristic data A extracted by biometric characteristic detection processing 34 with the three sets of registered biometric characteristic data R1, R2, R3, as shown in Fig. 13, performs verification processing, and outputs the verification result (user matches ID or not).

Fig. 12 provides a more detailed explanation.
(S30) The three sets of biometric characteristic data R1, R2, R3 for the ID presented by the user are read from the storage portion 4a.
(S32) Irradiation (e.g.with near-infrared light) from the image capture device 1 is used to obtain a biometric information image. The biometric information detection processing 30 detects the outline of the hand (or finger) from the image, and from the outline judges whether the image can be used in verification processing. When sufficient biometric information is not present in the image or in similar cases, a captured image is judged as NG. Then the guidance message output processing 32 outputs, to the display of the terminal device 3, a message providing guidance to move the body part upward, downward, right or left. When the biometric information detection processing 30 judge that an image has been obtained in the correct position, the biometric characteristic extraction processing 39 extracts the biometric characteristic data from the biometric information as extracted biometric characteristic data set A.
(S34) The first registered biometric characteristic data set R1 is compared with the extracted biometric characteristic data set A, and the degree of similarity is calculated. The degree of similarity is a quantity (measured value) indicating the extent of coincidence of the two biometric characteristic patterns, and various pattern matching techniques may be used. The degree of similarity is compared to a predetermined threshold value, and if the comparison is satisfactory (e.g. if the measured value is equal to or greater than the threshold) the data R1 and A are judged to be similar (OK), authentication is accomplished, and processing ends.
(S36) If on the other hand in step 539 the degree of similarity is insufficient (e.g. less than) does not exceed the threshold value, a judgment of no good (NG) is returned. Then, the second registered biometric characteristic data set R2 is compared with the extracted biometric characteristic data set A, and the degree of similarity is calculated. For example, if the degree of similarity is equal to or greater than the predetermined threshold value, the two are judged to be similar (OK), authentication is accomplished, and processing ends.
(S38) If on the other hand in step S36 the degree of similarity is less than the threshold value, a judgment of not similar (NG) is returned. Then, the third registered biometric characteristic data set R3 is compared with the extracted biometric characteristic data set A, and the degree of similarity is calculated. If the degree of similarity is equal to or greater than the predetermined threshold'value, the two are judged to be similar (OK), authentication is accomplished, and processing ends. If, however, the threshold value is not reached, the two are judged not to be similar, and processing ends with an error.

In this trial authentication, as shown in Fig. 11, if verification processing is not satisfactory the terminal device 1 can be instructed to capture another image. Hence there are increased opportunities for trial authentication by users, who can become familiar with the authentication method, contributing to the widespread use of the authentication system.

### Other Embodiments

In the above-described embodiment, biometric authentication was explained for the case of fingerprints; but the embodiment can also be applied to palm prints, palm types, iris patterns, retina features, blood vessel patterns, facial features, voiceprints, manners of walking, the concha of the ear, DNA, and similar.

Further, calculation of degree of similarity was explained using bitmap pattern matching techniques, but widely-known methods for vectorizing data and calculating degree of similarity in terms of vector directions and lengths can also be used. Also, branch points, endpoints and other minutiae can be used in calculations. The number of registrations is not limited to three times, but may be any number greater than 1. Verification (authentication) processing is performed by the same method as in Fig. 11 to Fig. 13, and is executed by the gateway terminal 8 and automated gateway terminal 6 in Fig. 1, for example.

In the above, embodiments of the invention have been explained, but various modifications of the invention are possible within the scope of the claims, and such modifications are not excluded from the scope of the invention.

Biometric information is acquired a plurality of times for the same living body from a detection unit, the mutual degrees of similarity among characteristic data extracted from the obtained plurality of sets of biometric information are judged, and a plurality of characteristic data sets with a high degree of similarity are registered in a storage unit, so that even when biometric characteristic data detected a plurality of times is used, verification can be performed which accommodates changes in the state of the living body without lowering verification accuracy, and moreover problems for the user can he prevented, such as unsuccessful authentication of themselves, contributing to widespread use of the biometric authentication system.

## Claims

1. A biometric authentication system, for detecting biometric characteristic data from a living body and verifying the detected biometric characteristic data against registered characteristic data already obtained from said living body to authenticate an individual, comprising:
a detection unit (1) for detecting biometric information from said living body;
a storage unit (4a) for storing said registered biometric characteristic data; and
a processing unit (3) for extracting said biometric characteristic data from biometric information detected by said detection unit (1) and registering said biometric characteristic data in said storage unit (4a), and for extracting biometric characteristic data from biometric information detected by said detection unit (1) and verifying said extracted biometric characteristic data against said biometric characteristic data registered in said storage unit (4a) to authenticate the individual,
wherein, in registering said biometric characteristic data, said processing unit (3) is operable to obtain a plurality of sets of biometric information for the same living body from said detection unit (1), judge the degree of mutual similarity of biometric characteristic data sets extracted from said plurality of sets of biometric information, and register a plurality of characteristic data sets with a high degree of similarity in said storage unit (4a),
**characterised in that**:
said processing unit (3) is arranged to register biometric characteristic data acquired in a first time, calculate the degree of similarity with biometric characteristic data set acquired in a second time, and compare the said degree of similarity to a prescribed threshold value,
when the degree of similarity of the biometric characteristic data for registration is equal to or greater than the threshold value, said processing unit (3) is arranged to judge the degree of similarity to be high and register said biometric characteristic data in said storage unit (4a), and
when the degree of similarity of the biometric characteristic data for registration is less than the threshold value, said processing unit (3) is arranged to acquire the biometric information from said detection unit (1) again, calculate the degrees of similarity between biometric characteristic data set from an nth time with every biometric characteristic data sets from the first time to the (n-1)th time, and compare each degree of similarity to the threshold value, until a prescribed number of characteristic data sets is registered in said storage unit (4a).

2. The biometric authentication system according to Claim 1, wherein said processing unit (3), after registering said plurality of characteristic data sets with a high degree of similarity in said storage unit (4a), acquires further biometric information from said detection unit (1), extracts biometric characteristic data therefrom, and verifies the extracted biometric characteristic data against the plurality of biometric characteristic data sets registered in said storage unit (4a) to perform trial authentication of the individual.

3. The biometric authentication system according to Claim 1 or 2, wherein said detection unit (1) comprises an image capture unit for capturing images of biometric information of the user, as said biometric information,
and wherein the biometrics characteristic data registered in said storage unit (4a) is the biometric characteristic data obtained from said biometric information.

4. The biometric authentication system according to any preceding Claim, wherein said processing unit (3), at the time of individual authentication, reads said plurality of biometric characteristic data sets from said storage unit (4a) according to identification information of said individual, acquires biometric information from said detection unit (1), extracts biometric characteristic data from the acquired biometric information, and verifies said extracted biometric characteristic data against said plurality of biometric characteristic data sets registered in said storage unit (4a).

5. The biometric authentication system according to Claim 4, wherein said processing unit (3) detects whether said extracted biometric characteristic data is similar to one of said plurality of registered characteristic data sets, and performs individual authentication.

6. A registration method for acquiring and registering biometric characteristic data of an individual for use in authenticating the individual, comprising the steps of:
acquiring, a plurality of times, biometric information of a body part of the individual from a biometric detection unit (1);
judging the degree of similarity between characteristic data sets extracted from said biometric information acquired a plurality of times; and,
registering a plurality of biometric characteristic data sets with a high degree of similarity, in a storage unit (4a),
**characterised in that**:
said step of acquiring biometric information a plurality of times comprises acquiring essentially the same said biometric information of the body part from said detection unit (1) until a prescribed number of characteristic data sets with a high degree of similarity are obtained, and
said step of judging the degree of similarity comprises:
a step of calculating the degrees of similarity between biometric characteristic data set acquired in an nth time with every biometric characteristic data sets acquired in the first time to the (n-1)th time;
a step of comparing a measured value of said degree of similarity to a prescribed threshold value; and
a step of judging whether the biometric characteristic data is appropriate for registration, wherein
when a measured value of the degree of similarity of biometric characteristic data for registration is equal to or greater than the threshold value, the biometric characteristic data is judged to be appropriate, and
when the degree of similarity of the biometric characteristic data for registration is less than the threshold value, the biometric characteristic data is judged to be not appropriate, continue acquiring another biometric information.

7. The registration method according to Claim 6, further comprising a step of performing a trial authentication of the individual after registering said plurality of characteristic data sets with a high degree of similarity in said storage unit (4a).

8. The registration method according to Claim 7,
wherein said step of performing a trial authentication comprises the steps of:
acquiring new biometric information from said biometric detection unit (1);
extracting biometric characteristic data from the acquired biometric information; and
verifying said biometric characteristic data against said plurality of characteristic data sets registered in said storage unit (4a).

9. The registration method according to any of Claim 6 to 8, wherein said step of acquiring biometric information comprises a step of obtaining captured image data from an image capture unit of the biometric detection unit (1) which captures images of biometric information of a user,
and wherein said registration step comprises a step of obtaining biometric characteristic data obtained from said biometric information.

10. The registration method for a biometric authentication system according to any of Claims 6 to 9, further comprising a step of performing individual authentication,
wherein said individual authentication step comprises the steps of:
reading from said storage unit (4a) said plurality of biometric characteristic data sets according to identification information for said individual;
acquiring biometric information from said detection unit (1);
extracting biometric characteristic data from the acquired biometric information; and
verifying said biometric characteristic data against said plurality of biometric characteristic data sets registered in said storage unit (4a).

11. The registration method according to Claim 10,
wherein said step of verifying said biometric characteristic data comprises detecting whether said extracted biometric characteristic data is similar to one of said plurality of registered characteristic data sets, so as to perform individual authentication.

12. A program containing program code which, when executed by a computer, causes the computer to perform the steps of:
acquiring biometric information of a living body a plurality of times using a biometric detection unit (1);
judging the degree of similarity among biometric characteristic data sets extracted from said biometric information acquired a plurality of times; and
registering a plurality of characteristic data sets with a high degree of similarity in a storage unit (4a)
**characterised in that**:
said step of acquiring biometric information a plurality of times comprises acquiring essentially the same said biometric information of the body part from said detection unit (1) until a prescribed number of characteristic data sets with a high degree of similarity are obtained, and
said step of judging the degree of similarity comprises:
a step of calculating the degrees of similarity between biometric characteristic data set acquired in an nth time with every biometric characteristic data sets acquired in the first time to the (n-1)th time;
a step of comparing a measured value of said degree of similarity to a prescribed threshold value; and
a step of judging whether the biometric characteristic data is appropriate for registration, wherein
when a measured value of the degree of similarity of biometric characteristic data for registration is equal to or greater than the threshold value, the biometric characteristic data is judged to be appropriate, and
when the degree of similarity of the biometric characteristic data for registration is less than the threshold value, the biometric characteristic data is judged to be not appropriate, continue acquiring another biometric information.

13. The program according to Claim 12, further causing the computer to execute steps of, after registration of said plurality of characteristic data sets with a high degree of similarity, acquiring new biometric information of the living body using said biometric detection unit (1), extracting biometric characteristic data from the newly acquired biometric information, verifying said biometric characteristic data against said plurality of characteristic data sets registered in said storage unit (4a), to perform trial authentication.

## Patentansprüche

1. Biometrisches Authentisierungssystem, zum Detektieren von biometrischen charakteristischen Daten von einem lebenden Körper und Verifizieren der detektierten biometricschen charakteristischen Daten gegenüber registrierten charakteristischen Daten, die von dem lebenden Körper bereits erhalten wurden, um eine Person zu authentisieren, umfassend:
eine Detektionseinheit (1) zum Detektieren von biometrischen Informationen von dem lebenden Körper;
eine Speichereinheit (4a) zum Speichern der registrierten biometrischen charakteristischen Daten; und
eine Verarbeitungseinheit (3) zum Extrahieren der biometrischen charakteristischen Daten von biometrischen Informationen, die durch die Detektionseinheit (1) detektiert wurden, und Registrieren der biometrischen charakteristischen Daten in der Speichereinheit (4a) und zum Extrahieren von biometrischen charakteristischen Daten von biometrischen Informationen, die durch die Detektionseinheit (1) detektiert wurden, und Verifizieren der extrahierten biometrischen charakteristischen Daten gegenüber den biometrischen charakteristischen Daten, die in der Speichereinheit (4a) registriert sind, um die Person zu authentisieren,
bei dem beim Registrieren der biometrischen charakteristischen Daten die Verarbeitungseinheit (3) betriebsfähig ist, um eine Vielzahl von Sätzen von biometrischen Informationen für denselben lebenden Körper von der Detektionseinheit (1) zu erhalten, den Grad der gegenseitigen Ähnlichkeit von biometrischen charakteristischen Datensätzen zu beurteilen, die von der Vielzahl von Sätzen von biometrischen Informationen extrahiert wurden, und eine Vielzahl von charakteristischen Datensätzen mit einem hohen Ähnlichkeitsgrad in der Speichereinheit (4a) zu registrieren,
**dadurch gekennzeichnet, dass:**
die Verarbeitungseinheit (3) angeordnet ist, um biometrische charakteristische Daten zu registrieren, die beim ersten Mal erfasst wurden, den Grad der Ähnlichkeit mit einem biometrischen charakteristischen Datensatz, der beim zweiten Mal erfasst wurde, zu berechnen und den Ähnlichkeitsgrad mit einem vorgegebenen Schwellenwert zu vergleichen,
dann, wenn der Ähnlichkeitsgrad der biometrischen charakteristischen Daten zur Registrierung größer gleich dem Schwellenwert ist, die Verarbeitungseinheit (3) angeordnet ist, um den Ähnlichkeitsgrad als hoch zu beurteilen und die biometrischen charakteristischen Daten in der Speichereinheit (4a) zu registrieren, und,
wenn der Ähnlichkeitsgrad der biometrischen charakteristischen Daten zur Registrierung kleiner als der Schwellenwert ist, die Verarbeitungseinheit (3) angeordnet ist, um die biometrischen Informationen von der Detektionseinheit (1) wieder zu erfassen, die Grade der Ähnlichkeit zwischen dem biometrischen charakteristischen Datensatz von einem n-ten Mal und jeweiligen biometrischen charakteristischen Datensätzen der ersten bis (n-1)-ten Male zu berechnen und jeden Ähnlichkeitsgrad mit dem Schwellenwert zu vergleichen, bis eine vorgegebene Anzahl von charakteristischen Datensätzen in der Speichereinheit (4a) registriert ist.

2. Biometrisches Authentisierungssystem nach Anspruch 1, bei dem die Verarbeitungseinheit (3) nach dem Registrieren der Vielzahl von charakteristischen Datensätzen mit einem hohen Ähnlichkeitsgrad in der Speichereinheit (4a) weitere biometrische Informationen von der Detektionseinheit (1) erfasst, biometrische charakteristische Daten von ihnen extrahiert und die extrahierten biometrischen charakteristischen Daten gegenüber der Vielzahl von biometrischen charakteristischen Datensätzen verifiziert, die in der Speichereinheit (4a) registriert sind, um eine Probeauthentisierung der Person auszuführen.

3. Biometrisches Authentisierungssystem nach Anspruch 1 oder 2, bei dem die Detektionseinheit (1) eine Bilderlangungseinheit zum Erlangen von Bildern von biometrischen Informationen des Nutzers als biometrische Informationen umfasst
und bei dem die biometrischen charakteristischen Daten, die in der Speichereinheit (4a) registriert sind, die biometrischen charakteristischen Daten sind, die von den biometrischen Informationen erhalten wurden.

4. Biometrisches Authentisierungssystem nach einem vorhergehenden Anspruch, bei dem die Verarbeitungseinheit (3), bei der Personenauthentisierung, die Vielzahl von biometrischen charakteristischen Datensätzen von der Speichereinheit (4a) gemäß Identifikationsinformationen der Person liest, biometrische Informationen von der Detektionseinheit (1) erfasst, biometrische charakteristische Daten von den erfassten biometrischen Informationen extrahiert und die extrahierten biometrische charakteristischen Daten gegenüber der Vielzahl von biometrischen charakteristischen Datensätzen verifiziert, die in der Speichereinheit (4a) gespeichert sind.

5. Biometrisches Authentisierungssystem nach Anspruch 4, bei dem die Verarbeitungseinheit (3) detektiert, ob die extrahierten biometrischen charakteristischen Daten einem von der Vielzahl von registrierten charakteristischen Datensätzen ähnlich sind, und eine Personenauthentisierung ausführt.

6. Registrierverfahren zum Erfassen und Registrieren von biometrischen charakteristischen Daten einer Person zur Verwendung beim Authentisieren der Person, mit den Schritten:
vielmaliges Erfassen von biometrischen Informationen eines Körperteils der Person von einer biometrischen Detektionseinheit (1);
Beurteilen des Grades der Ähnlichkeit zwischen charakteristischen Datensätzen, die von den biometrischen Informationen extrahiert wurden, die viele Male erfasst wurden; und
Registrieren einer Vielzahl von biometrischen charakteristischen Datensätzen mit einem hohen Ähnlichkeitsgrad in einer Speichereinheit (4a),
**dadurch gekennzeichnet, dass:**
der Schritt zum vielmaligen Erfassen von biometrischen Informationen im Wesentlichen das Erfassen derselben biometrischen Informationen des Körperteils von der Detektionseinheit (1) umfasst, bis eine vorgegebene Anzahl von charakteristischen. Datensätzen mit einem hohen Ähnlichkeitsgrad erhalten ist, und
der Schritt zum Beurteilen des Ähnlichkeitsgrades umfasst:
einen Schritt zum Berechnen der Grade der Ähnlichkeit zwischen einem biometrischen charakteristischen Datensatz, der bei einem n-ten Mal erfasst wurde, und jeweiligen biometrischen charakteristischen Datensätzen, die bei den ersten bis (n-1)-ten Malen erfasst wurden;
einen Schritt zum Vergleichen eines Messwertes des Grades der Ähnlichkeit mit einem vorgegebenen Schwellenwert; und
einen Schritt zum Beurteilen, ob die biometrischen charakteristischen Daten zum Registrieren zweckmäßig sind, bei dem dann,
wenn ein Messwert des Ähnlichkeitsgrades von biometrischen charakteristischen Daten zum Registrieren größer gleich dem Schwellenwert ist, die biometrischen charakteristischen Daten als zweckmäßig beurteilt werden und,
wenn der Ähnlichkeitsgrad der biometrischen charakteristischen Daten zum Registrieren kleiner als der Schwellenwert ist, die biometrischen charakteristischen Daten als nicht zweckmäßig beurteilt werden und das Erfassen anderer biometrischer Informationen fortgesetzt wird.

7. Registrierverfahren nach Anspruch 6, ferner mit einem Schritt zum Ausführen einer Probeauthentisierung der Person nach dem Registrieren der Vielzahl von charakteristischen Datensätzen mit einem hohen Ähnlichkeitsgrad in der Speichereinheit (4a).

8. Registrierverfahren nach Anspruch 7, bei dem der Schritt zum Ausführen einer Probeauthentisierung die Schritte umfasst:
Erfassen neuer biometrischer Informationen von der biometrischen Detektionseinheit (1);
Extrahieren von biometrischen charakteristischen Daten von den erfassten biometrischen Informationen; und
Verifizieren der biometrischen charakteristischen Daten gegenüber der Vielzahl von charakteristischen Datensätzen, die in der Speichereinheit (4a) registriert sind.

9. Registrierverfahren nach einem der Ansprüche 6 bis 8, bei dem der Schritt zum Erfassen von biometrischen Informationen einen Schritt zum Erhalten von erlangten Bilddaten von einer Bilderlangungseinheit der biometrischen Detektionseinheit (1) umfasst, die Bilder von biometrischen Informationen eines Nutzers erlangt,
und bei dem der Registrierschritt einen Schritt zum Erhalten von biometrischen charakteristischen Daten umfasst, die von den biometrischen Informationen erhalten werden.

10. Registrierverfahren für ein biometrische Authentisierungssystem nach einem der Ansprüche 6 bis 9, ferner mit einem Schritt zum Ausführen einer Pcrsonenauthentisierung,
bei dem der Personenauthentisierungssehritt die Schritte umfasst:
Lesen, von der Speichereinheit (4a), der Vielzahl von biometrischen charakteristischen Datensätzen gemäß Identifikationsinformationen für die Person;
Erfassen von biometrischen Informationen von der Detektionseinheit (1);
Extrahieren von biometrischen charakteristischen Daten von den erfassten biometrischen Informationen; und
Verifizieren der biometrischen charakteristischen Daten gegenüber der Vielzahl von biometrischen charakteristischen Datensätzen, die in der Speichereinheit (4a) registriert sind.

11. Registrierverfahren nach Anspruch 10, bei dem der Schritt zum Verifizieren der biometrischen charakteristischen Daten das Detektieren in Bezug darauf umfasst, ob die extrahierten biometrischen charakteristischen Daten einem von der Vielzahl von registrierten charakteristischen Datensätzen ähnlich sind, um die Personenauthentisierung auszuführen.

12. Programm, das einen Programmcode enthält, der dann, wenn der durch einen Computer ausgeführt wird, bewirkt, dass der Computer die Schritte ausführt:
vielmaliges Erfassen von biometrischen Informationen eines lebenden Körpers unter Verwendung einer biometrischen Detektionseinheit (1);
Beurteilen des Grades der Ähnlichkeit zwischen charakteristischen Datensätzen, die von den biometrischen Informationen extrahiert wurden, die viele Male erfasst wurden; und
Registrieren einer Vielzahl von charakteristischen Datensätzen mit einem hohen Ähnlichkeitsgrad in einer Speichereinheit (4a),
**dadurch gekennzeichnet, dass:**
der Schritt zum vielmaligen Erfassen von biometrischen Informationen im Wesentlichen das Erfassen derselben biometrischen Informationen des Körperteils von der Detektionseinheit (1) umfasst, bis eine vorgegebene Anzahl von charakteristischen Datensätzen mit einem hohen Ähnlichkeitsgrad erhalten ist, und
der Schritt zum Beurteilen des Ähnlichkeitsgrades umfasst:
einen Schritt zum Berechnen der Grade der Ähnlichkeit zwischen einem biometrischen charakteristischen Datensatz, der bei einem n-ten Mal erfasst wurde, und jeweiligen biometrischen charakteristischen Datensätzen, die bei den ersten bis (n-1)-ten Malen erfasst wurden;
einen Schritt zum Vergleichen eines Messwertes des Ähnlichkeitsgrades mit einem vorgegebenen Schwellenwert; und
einen Schritt zum Beurteilen, ob die biometrischen charakteristischen Daten zum Registrieren zweckmäßig sind, bei dem dann,
wenn ein Messwert des Ähnlichkeitsgrades von biometrischen charakteristischen Daten zum Registrieren größer gleich dem Schwellenwert ist, die biometrischen charakteristischen Daten als zweckmäßig beurteilt werden und,
wenn der Ähnlichkeitsgrad der biometrischen charakteristischen Daten zum Registrieren kleiner als der Schwellenwert ist, die biometrischen charakteristischen Daten als nicht zweckmäßig beurteilt werden und das Erfassen anderer biometrischer Informationen fortgesetzt wird.

13. Programm nach Anspruch 12, das ferner bewirkt, dass der Computer nach dem Registrieren der Vielzahl von charakteristischen Datensätzen mit einem hohen Ähnliehkeitsgrad die Schritte ausführt zum Erfassen von neuen biometrischen Informationen des lebenden Körpers unter Verwendung der biometrischen Detektionseinheit (1), Extrahieren von biometrischen charakteristischen Daten von den neu erfassten biometrischen Informationen, Verifizieren der biometrischen charakteristischen Daten gegenüber der Vielzahl von charakteristischen Datensätzen, die in der Speichereinheit (4a) registriert sind, um eine Probeauthentisierung auszuführen.

## Revendications

1. Système d'authentification biométrique pour détecter des données de caractéristiques biométriques provenant d'un être vivant et vérifier les données de caractéristiques biométriques détectées par rapport aux données de caractéristiques enregistrées déjà obtenues à partir dudit être visant affin d'authentifier un individu, comportant :
une unité de détection (1) pour détecter une information biométrique promenant dudit être vivant ;
une unité de stockage (4a) pour mémoriser lesdites données de caractéristiques biométriques enregistrées ; et
une unité de traitement (3) pour extraire lesdites données de caractéristiques biométriques à partir de l'information biométrique détectée par ladite unité de détection (1) et enregistrer lesdites données de caractéristiques biométriques dans ladite unité de stockage (4a), et pour extraire les données de caractéristiques biométriques à partir de l'information biométrique détectée par ladite unité de détection (1) et vérifier lesdites données de caractéristiques biométriques extraites par rapport auxdites données de caractéristiques biométriques enregistrées dans ladite unité de stockage (4a) afin d'authentifier l'individu,
dans lequel, lors de l'enregistrement desdites donnés de caractéristiques biométriques, ladite unité de traitement (3) permet d'obtenir une pluralité d'ensembles d'informations biométriques pour le même être vivant à partir de ladite unité de détection (1), d'estimer le degré de similarité mutuelle des ensembles de données de caractéristiques biométriques extraits de ladite pluralité d'ensembles d'informations biométriques, et enregistrer une pluralité d'ensembles de données de caractéristiques avec un degré élevé de similarité dans ladite unité de stockage (4a),
**caractérisé en ce que :**
ladite unité de traitement (3) est agencée pour enregistrer des données de caractéristiques biométriques acquises dans un premier temps, calculer le degré de similarité avec l'ensemble de données de caractéristiques biométriques acquis dans un second temps, et compare ledit degré de similarité à une valeur de seuil prescrite,
lorsque le degré de similarité des données de caractéristiques biométriques pour l'enregistrement est égal à ou supérieur à la valeur de seuil, ladite unité de traitement (3) est agencée pour estimer le degré de similarité comme étant élevé et enregistrer lesdites données de caractéristiques biométriques dans ladite unité de stockage (4a), et
lorsque le degré de similarité des données de caractéristiques biométriques pour l'enregistrement est inférieur à la valeur de seuil, ladite unité de traitement (3) est agencée pour acquérir de nouveau l'information biométrique à partir de ladite unité de détection (1), calculer les degrés de similarité entre l'ensemble de données de caractéristiques biométriques à un n-ième temps avec chaque ensemble de données de caractéristiques biométriques du premier temps au (n-1)-ième temps, et comparer chaque degré de similarité à la valeur de seuil, jusqu'à ce qu'un nombre prescrit d'ensembles de données de caractéristiques soit enregistré dans ladite unité de stockage (4a).

2. Système d'authentification biométrique selon la revendication 1, dans lequel ladite unité de traitement (3), après enregistrement de ladite pluralité d'ensembles de données de caractéristiques avec un degré élevé de similarité dans ladite unité de stockage (4a), acquiert d'autres informations biométriques à partir de ladite unité de détection (1), en extrait des données de caractéristiques biométriques, et vérifie les données de caractéristiques biométriques extraites par rapport à la pluralité d'ensembles de données de caractéristiques biométriques enregistrés dans ladite unité de stockage (4a) afin d'effectuer une authentification d'essai de l'individu.

3. Système d'authentification biométrique selon la revendication 1 ou 2, dans lequel ladite unité de détection (1) comporte une unité de capture d'image pour capture des images d'information biométrique de l'utilisateur, en tant qu'information biométrique,
et dans lequel les données de caractéristiques biométriques enregistrées dans ladite unité de stockage (4a) sont les données de caractéristiques biométriques obtenues à partir de ladite information biométrique.

4. Système d'authentification biométrique selon l'une quelconque des revendications précédentes, dans lequel ladite unité de traitement (3), au moment de l'authentification de l'individu, lit ladite pluralité d'ensembles de données de caractéristiques biométriques à partir de ladite unité de stockage (4a) conformément à l'information d'identification dudit individu, acquért une information biométrique à partir de ladite unité de détection (1), extrait des données de caractéristiques biométriques à partir de l'information biométrique acquise, et vérifie lesdites données dé caractéristiques biométriques extraites par rapport à ladite pluralité d'ensembles de données de caractéristiques biométriques enregistrés dans ladite unité de stockage (4a).

5. Système d'authentification biométrique selon la revendication 4, dans lequel ladite unité de traitement (3) détecte si lesdites données de caractéristiques biométriques extraites sont similaires à l'un de ladite pluralité d'ensembles de données de caractéristiques enregistrées, et effectue l'authentification individuelle.

6. Procédé d'enregistrement pour acquérir et enregistrer des données de caractéristiques biométriques d'un individu utilisées lors de l'authentification de l'individu, comportant les étapes consistant à :
acquérir, plusieurs fois, une information biométrique d'une partie corporelle de l'individu à partir d'une unité de détection biométrique (1) ;
estimer le degré de similarité entre les ensembles de données de caractéristiques extraits à partir de ladite information biométrique acquise plusieurs fois ; et
enregistrer une pluralité d'ensembles de données de caractéristiques biométriques présentant un degré élevé de similarité dans une unité de stockage (4a),
**caractérisé en ce que :**
ladite étape d'acquisition d'information biométrique plusieurs fois comporte essentiellement l'acquisition de la même information biométrique de la partie corporelle à partir de ladite unité de détection (1) jusqu'à ce qu'un nombre prescrit d'ensembles de données de caractéristiques présentant un degré élevé de similarité soit obtenu, et
ladite étape d'estimation du degré de similarité comporte :
une étape de calcul des degrés de similarité entre l'ensemble de données de caractéristiques biométriques acquis à un n-iéme temps aven chaque ensemble de données de caractéristiques biométriques acquis à un premier temps jusqu'au (n-1)-ième temps ;
une étape de comparaison d'une valeur mesurée dudit degré de similarité à une valeur de seuil prescrite ; et
une étape pour estimer si les données de caractéristiques biométriques sont appropriées pour l'enregistrement, dans laquelle
lorsque la valeur mesurée du degré de similarité des données de caractéristiques biométriques pour l'enregistrement est égale à ou supérieure à la valeur de seuil, les données de caractéristiques biométriques sont estimées être appropriées, et
lorsque le degré de similarité des données de caractéristiques biométriques pour l'enregistrement est inférieur à la valeur de seuil, les données de caractéristiques biométriques sont estimées ne pas être appropriées, continuer alors l'acquisition d'autres informations biométriques.

7. Procédé d'enregistrement salon la revendication 6, comportant en outre une étape pour effectuer une authentification d'essai de l'individu après enregistrement de ladite pluralité d'ensembles de données de caractéristiques présentant un degré élevé de similarité dans ladite unité de stockage (4a).

8. Procédé d'enregistrement selon la revendication 7, dans lequel ladite étape pour effectuer une authentification d'essai comporte les étapes consistant à :
acquérir une nouvelle information biométrique à partir de ladite unité de détection biométrique (1) ;
extraire des données de caractéristiques biométriques à partir de l'information biométrique acquise ; et
vérifier lesdites données de caractéristiques biométriques par rapport à ladite pluralité d'ensembles de données de caractéristiques enregistrés dans ladite unité de stockage (4a).

9. Procédé d'enregistrement selon l'une quelconque des revendications 6 à 8, dans lequel ladite étape d'acquisition d'information biométrique comporte une étape d'obtention de données d'images capturés à partir d'une unité de capture d'image de l'unité de détection biométrique (1) qui capture des images d'information biométrique d'un utilisateur,
et dans lequel ladite étape d'enregistrement comporte une étape d'obtention des données de caractéristiques biométriques obtenues à partir de ladite information biométrique.

10. Procédé d'enregistrement pour un système d'authentification biométrique selon l'une quelconque des revendications 6 à 9, comportant en outre une étape pour effectuer une authentification individuelle,
dans lequel ladite étape d'authentification individuelle comporte les étapes consistant à :
lire à partir de ladite unité de stockage (4a) ladite pluralité d'ensembles de données de caractéristiques biométriques selon l'information d'identification pour ledit individuel ;
acquérir une information biométrique à partir de ladite unité de détection (1) ;
extraire les données de caractéristiques biométriques à partir de ladite information biométrique acquise ; et
vérifieur lesdites données de caractéristiques biométriques par rapport à ladite pluralité d'ensembles de données de caractéristiques biométriques enregistrés dans ladite unité de stockage (4a).

11. Procédé d'enregistrement selon la revendication 10, dans lequel ladite étape de vérification desdites données de caractéristiques biométriques comporte le fait de détecter si lesdites données de caractéristiques biométriques extraites sont similaires à l'un de ladite pluralité d'ensembles de données de caractéristiques enregistrés, de manière à effectuer une authentification individuelle.

12. Programme contenant un code de programme qui, lorsqu'il est exécuté par un ordinateur, amène l'ordinateur à effectuer les étapes consistant à :
acquérir une information biométrique d'un être vivant plusieurs fois en utilisant une unité de détection biométrique (1) ;
estimer le degré de similarité parmi les ensembles de données de caractéristiques biométriques extraits à partir de ladite information biométrique acquise plusieurs fois ; et
enregistrer une pluralité d'ensembles de données de caractéristiques présentant un degré élevé de similarité dans une unité de stockage (4a) ;
**caractérisé en ce que** :
ladite étape d'acquisition d'une information biométrique plusieurs fois comporte essentiellement l'acquisition de la même information biométrique de la partie corporelle à partir de ladite unité de détection (1) jusqu'à ce qu'un nombre prescrit d'ensembles de données de caractéristiques présentant un degré élevé de similarité soit obtenu, et
ladite étape d'estimation du degré due similarité comporte :
une étape de calcul des degrés de similarité entre l'ensemble de données de caractéristiques biométriques acquis à un n-ième temps avec chaque ensemble de données de caractéristiques biométriques acquis du premier temps au (n-1)-ième temps ;
une étape de comparaison d'une valeur mesurée dudit degré de similarité à une valeur de seuil prescrite ; et
une étape pour estimer si les données de caractéristiques biométriques sont appropriées pour l'enregistrement, dans laquelle
lorsqu'une valeur mesurée du degré de similarité des données de caractéristiques biométriques pour l'enregistrement est égale à ou supérieure à la valeur de seuil, les données de caractéristiques biométriques sont estimées être appropriées, et
lorsque le degré de similarité des données de caractéristiques biométriques pour l'enregistrement est inférieur à la valeur de seuil, les données de caractéristiques biométriques sont estimées ne pas être appropriées, continuer alors l'acquisition d'une autre information biométrique.

13. Programme selon la revendication 12, amenant en outre l'ordinateur à exécuter les étapes consistant à, après enregistrement de ladite pluralité d'ensembles de données de caractéristiques présentant un degré élevé de similarité, acquérir une nouvelle information biométrique de l'être vivant en utilisant ladite unité de détection biométrique (1), extraire les données de caractéristiques biométriques à partir de l'information biométrique nouvellement acquise, vérifieur les données de caractéristiques biométriques par rapport à ladite pluralité d'ensembles de données de caractéristiques enregistrés dans ladite unité de stockage (4a) pour effectuer une authentification d'essai.
